(19) Europäisches Patentamt
European Patent Office
Office européen des brevets

(11) **EP 2 251 837 A2**

(12) **EUROPEAN PATENT APPLICATION**

(43) Date of publication:
**17.11.2010 Bulletin 2010/46**

(51) Int Cl.:
***G07C 9/00*** (2006.01)

(21) Application number: **10161938.5**

(22) Date of filing: **05.05.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **12.05.2009 JP 2009115871**

(71) Applicant: **KABUSHIKI KAISHA TOKAI RIKA DENKI SEISAKUSHO**
**Niwa-gun,**
**Aichi 480-0195 (JP)**

(72) Inventors:
• **Mori, Hiroshi**
  **Niwa-gun Aichi 480-0195 (JP)**
• **Kato, Hisashi**
  **Niwa-gun Aichi 480-0195 (JP)**

(74) Representative: **Skuhra, Udo**
**Reinhard, Skuhra, Weise & Partner GbR**
**Patent- und Rechtsanwälte**
**Friedrichstraße 31**
**80801 München (DE)**

(54) **Portable device and remote control system**

(57)    A portable device (12) that remotely controls a remote control subject (11) by receiving a response request signal (Srq) transmitted through wireless communication from a control unit (13) of the remote control subject (11) and returning a response signal (Srp) for the response request signal (Srq) to the control unit (13). The portable device is configured to set a response sensitivity (Vh) based on response sensitivity information (Srec) suitable for the remote control subject (11) transmitted through wireless communication from the control unit (13) separately from the response request signal (Srq).

## Fig.1

## Description

This application is based upon and claims the benefit of priority from prior Japanese Patent Application No. 2009-115871, filed on May 12, 2009, the entire contents of which are incorporated herein by reference.

The present invention relates to a portable device and a remote control system.

Japanese Laid-Open Patent Publication No. 2007-258877 describes an example of an electronic key system known in the prior art. When a user who is carrying a portable device approaches the vehicle door, the electronic key system automatically unlocks the vehicle door and permits the engine to be started as the user enters the vehicle. In the electronic key system, when the portable device is near the vehicle door or in a communication area set in the passenger compartment, various types of signals are exchanged through wireless communication between an in-vehicle device and the portable device. When exchanging signals, the in-vehicle device electronically authenticates the portable device by verifying an ID code of the portable device with an ID code stored in a memory of the in-vehicle device. When the portable device is authenticated, the in-vehicle device executes vehicle control to unlock the vehicle door or permit starting of the engine.

The communication areas set inside and outside the passenger compartment differ between vehicle models. The size of a vehicle differs depending between vehicle models. Thus, to obtain the desired communication characteristics for the electronic key system, the communication area must be set in accordance with the size of the vehicle. The communication area is set from the vehicle or from the portable device. When set from the vehicle, the range of the communication area is adjusted. When set from the portable device, the reception sensitivity of the portable device is adjusted. More specifically, when setting the communication area from the vehicle, the transmission output of a transmitter, which is installed in the vehicle, may be varied to adjust the distance from the vehicle reached by a wireless signal. Alternatively, the shape or location of the transmission antenna may be changed. In such cases, the reception sensitivity of the portable device is fixed. Further, when setting the communication area from the portable device, the reception sensitivity of the portable device is varied to adjust the distance from the vehicle in which a wireless signal is receivable by the portable device. In such a case, the transmission output of the wireless signal from the vehicle is fixed.

The applicant of the present application conducted a prior-art search but could not find a publication that describes a process for setting the communication area when manufacturing a vehicle.

The processes described above for setting the communication area allows for the communication area to be set for each vehicle model. However, the known processes for setting the communication area have shortcomings that will now be described. When setting the communication area from the vehicle, transmitters (wireless signal output circuits or drive circuits) of different transmission outputs are provided for different vehicle models so that the communication area is formed in correspondence with the vehicle model. However, an exclusive transmitter must be designed for each vehicle model. This raises the design costs of the transmitters and, ultimately, the manufacturing costs. When setting the communication area from the portable device, the reception sensitivity of the portable device must be set for each vehicle model. For example, the sensitivity information for each vehicle model is set in the portable device. However, this increase variations of the portable device and thereby raises the management cost for each vehicle model and, ultimately, the manufacturing costs.

Japanese Patent No. 3003668 describes manual setting of the range of the communication area from the vehicle and the reception sensitivity of the portable device in accordance with the vehicle user's preferences. The technique described in this publication may be applied when setting the communication area during manufacturing of the vehicle. However, this would be burdensome since the range of the wireless signal from the vehicle or the reception sensitivity of the portable device must be set for every single vehicle instead of each vehicle model.

Nowadays, the demand for reducing vehicle costs is becoming stronger. Under such a situation, it is strongly desired that the communication area between a vehicle and a portable device be easily and efficiently set when manufacturing the vehicle.

The present invention provides a portable device and a remote control system that easily sets the communication area in correspondence with a remote control subject.

One embodiment of the present invention is a portable device for remotely controlling a remote control subject by receiving a response request signal transmitted through wireless communication from a control unit of the remote control subject and returning a response signal for the response request signal to the control unit. The portable device is adapted to set a response sensitivity based on response sensitivity information suitable for the remote control subject transmitted through wireless communication from the control unit of the remote control subject separately from the response request signal.

A further embodiment of the present invention is a remote control system that performs authentication with a portable device using a control unit of a remote control subject through wireless communication performed between the portable device and the control unit and controls the remote control subject based on the result of the authentication. The control unit of the remote control subject is adapted to register the portable device by receiving a registration request signal, transmitting response sensitivity information suitable for the remote control subject through wireless communication to the portable device in response to the registration request signal, and storing in a memory identification information transmitted from the portable device through wireless communication in response to the response sensitivity information. The portable device is adapted to set its response sensitivity based on the response sensitivity information transmitted through wireless communication from the control unit of the remote control subject. Further, the portable device is adapted to transmit the identification information through wireless communication to the control unit of the remote control subject in response to the response sensitivity information.

Other embodiments and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:

    Fig. 1 is a schematic block diagram showing one embodiment of an electronic key system;
    Fig. 2 is a plan view showing one example of communication areas formed inside and outside the vehicle;
    Fig. 3 is a schematic block diagram showing an LF reception circuit of the portable device of Fig. 1;
    Fig. 4 is a graph showing the relationship between a signal intensity determination threshold value and an activation distance of the portable device;
    Fig. 5 is a plan view showing variations of vehicle exterior communication area for different vehicle models;
    Fig. 6A to 6C are plan views each showing a variation of the vehicle interior communication area for a different vehicle model; and
    Fig. 7 is a sequence chart showing the procedures for registering the portable device in the vehicle and registering the reception sensitivity information in the portable device.

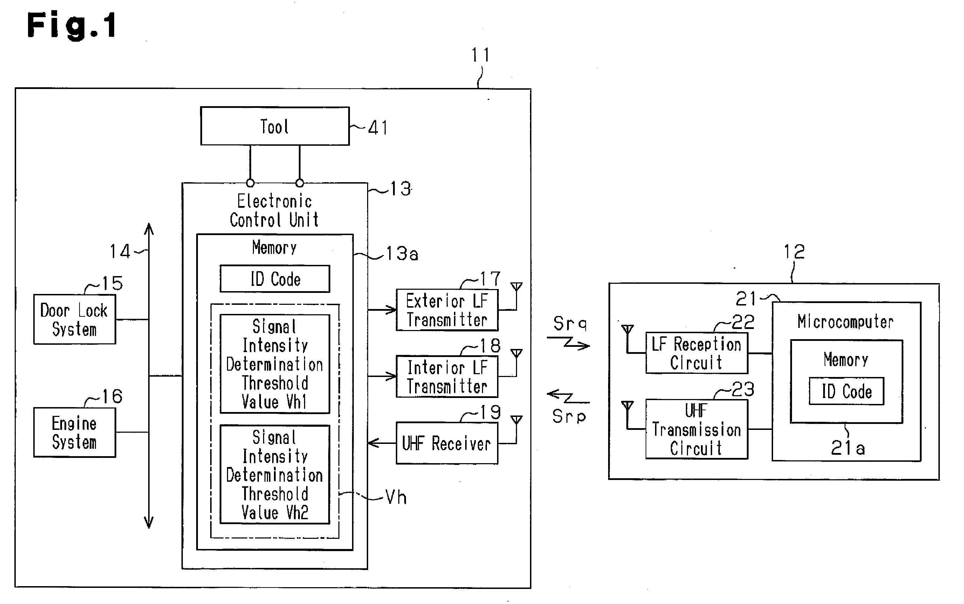

A remote control system according to the present invention embodied in an electronic key system for a vehicle will now be discussed with reference to Figs. 1 to 7. The electronic key system performs wireless communication between the portable device, which is carried by a user, and the vehicle to lock and unlock a vehicle door and permit starting of the engine. In other words, when the portable device, which is carried by the vehicle user, is located in a vehicle exterior communication area set near the vehicle or a vehicle interior communication area set in the passenger compartment, identification information of the portable device is transmitted to the vehicle through wireless communication and the vehicle performs a user authentication process using the identification information of the portable device.

<Electrical Structure of Vehicle>

Referring to Fig. 1, the electronic key system is installed in a vehicle 11. The vehicle 11 includes an electronic control unit 13, which performs wireless communication with the portable device (electronic key) 12, which is carried by the user, to verify identification information of a portable device 12 with identification information of the vehicle 11. The electronic control unit 13 is connected to a door lock system 15 and an engine system 16 by a vehicle interior local area network (LAN) 14. The door lock system 15 locks and unlocks a vehicle door based on the identification information verification result of the electronic control unit 13. The engine system 16 controls the power supply state of the vehicle 11 and the starting and stopping of the engine based on the verification result of the electronic control unit 13.

The electronic control unit 13 is connected to an exterior LF transmitter 17, an interior LF transmitter 18, and an UHF receiver 19 by a wire harness or the like (not shown). The exterior LF transmitter 17 is arranged in the vehicle door, and the interior LF transmitter 18 is arranged inside the vehicle in the floor. The UHF receiver 19 is arranged in a pillar or the like that supports the roof of the vehicle 11.

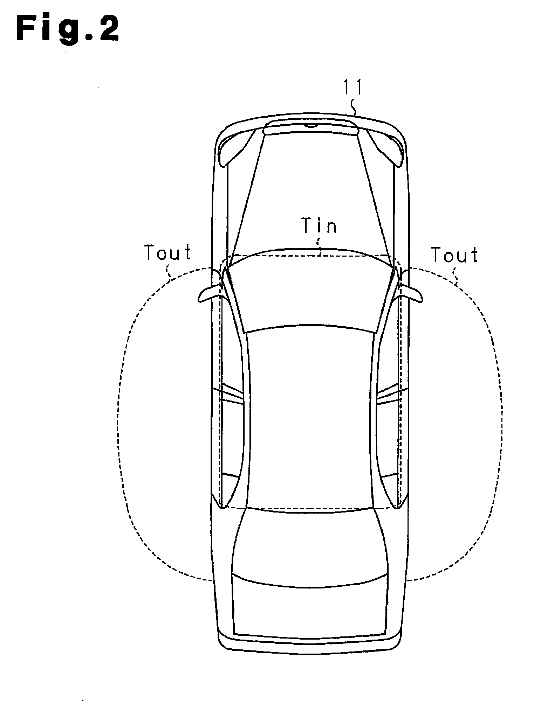

The exterior LF transmitter 17 and the interior LF transmitter 18 respectively transmit response request signals Srq, which are wireless signals in the LF band, to the outside and inside of the passenger compartment based on a command from the electronic control unit 13. The response request signal Srq is a command signal requesting for a response from the portable device 12. The response request signal Srq is transmitted in predetermined control cycles to form areas outside and inside the passenger compartment in which the portable device 12 communicates with the vehicle 11. For example, referring to Fig. 2, vehicle exterior communication areas Tout are formed near the vehicle doors, and a vehicle interior communication area Tin is formed throughout the entire passenger compartment. The vehicle exterior communication areas Tout and the vehicle interior communication area Tin are set based on the reception sensitivity (response sensitivity) of the portable device 12. The reception sensitivity of the portable device 12 will be described in detail later.

Referring to Fig. 1, the UHF receiver 19 receives wireless signals in the UHF band, demodulates the received signals, and sends the demodulated signals to the electronic control unit 13.

The electronic control unit 13 stores an ID code in a memory 13a, which is a storage device such as an EEPROM. The ID code is identification information of the portable device 12, which is associated with the electronic control unit 13 and thus authentic. The electronic control unit 13 receives a response signal Srp from the portable device 12 through the UHF receiver 19. Then, the electronic control unit 13 verifies the ID code in the response signal Srp with the ID code stored in the memory 13a to determine whether the portable device 12 is authentic.

In addition to the registration of the ID code of the portable device 12 in the memory 13a, the electronic control unit 13 stores the reception sensitivity information (response sensitivity information) required for the registered portable device 12 in the memory 13 a. In the present example, a signal intensity determination threshold value Vh is stored in the memory 13a as the reception sensitivity information. The portable device 12 receives the response request signal Srq from the vehicle 11 and determines whether or not the reception signal intensity of the response request signal Srq satisfies an activation condition level of the portable device 12 based on the signal intensity determination threshold value Vh. The signal intensity determination threshold value Vh is obtained in advance, for example, through experiments using a vehicle model and known theoretical calculations. The signal intensity determination threshold value Vh stored in the memory 13a includes a signal intensity determination threshold value vh1 for vehicle exterior authentication and a signal intensity determination threshold value Vh2 for vehicle interior authentication.

<Electrical Structure of Portable Device>

A microcomputer 21, which controls each part of the portable device 12, is connected to an LF reception circuit 22, which receives wireless signals in the LF band, and an UHF transmission circuit 23, which transmits wireless signals in the UHF band. The LF reception circuit 22 will be described in detail later.

The microcomputer 21 stores an ID code, which is identification information unique to the portable device 12, in a memory 21a, which is a storage device such as an EEPROM. The microcomputer 21 controls the reception of wireless signals in the LF band through the LF reception circuit 22. Further, the microcomputer 21 controls the transmission of wireless signals in the LF band through the UHF transmission circuit 23. When receiving the response request signal Srq from the vehicle 11 through the LF reception circuit 22, the microcomputer 21 transmits the response signal Srp, which includes information such as the ID code stored in the memory 21a, from the UHF transmission circuit 23.

<LF Reception Circuit>

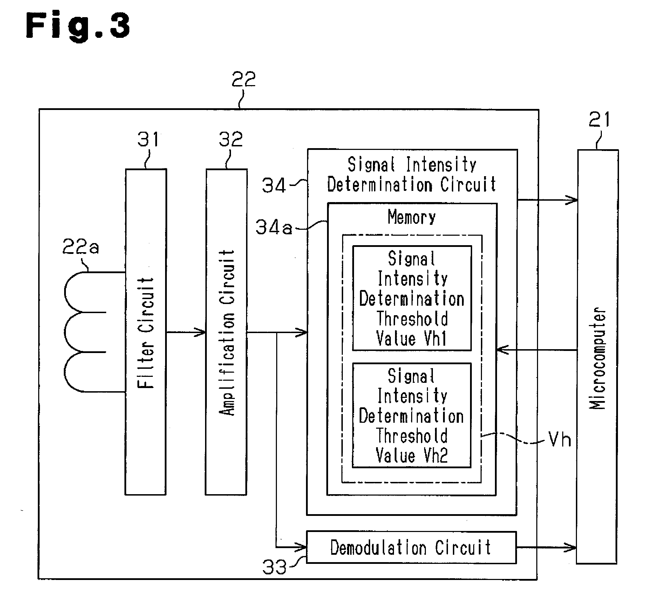

The LF reception circuit 22 of the portable device 12 will now be described in detail. Referring to Fig. 3, the LF reception circuit 22 includes a filter circuit 31, an amplification circuit 32, a demodulation circuit 33, and a signal intensity determination circuit 34. A reception antenna 22a is connected to an input side of the filter circuit 31. A coil antenna formed by winding a conductive wire or a so-called bar antenna formed by winding a conductive wire around a steel core (magnetic body) may be used as the reception antenna 22a. The amplification circuit 32, which is connected to an output side of the filter circuit 31, is connected to the demodulation circuit 33 and the signal intensity determination circuit 34. The demodulation circuit 33 and the signal intensity determination circuit 34 are connected to the microcomputer 21.

The filter circuit 31 filters and eliminates noise (noise: unnecessary signals of adjacent frequencies) from the wireless signal received by the reception antenna 22a. Then, the filter circuit 31 sends the filtered signal to the amplification circuit 32.

The amplification circuit 32 amplifies the filtered signal from the filter circuit 31, that is, the voltage (output voltage) induced by the reception antenna 22a to a level enabling demodulation. Then, the amplification circuit 32 sends the amplified signal to the demodulation circuit 33 and the signal intensity determination circuit 34.

The demodulation circuit 33 demodulates the received signal from the reception antenna 22a (amplified signal of the amplification circuit 32). Then, the demodulation circuit 33 sends the demodulated signal to the microcomputer 21.

The signal intensity determination circuit 34 determines the intensity of the received signal from the reception antenna 22a (amplified signal of the amplification circuit 32) and compares the determined reception signal intensity with a signal intensity determination threshold value Vh, which is stored in advance in its memory 34a. The signal intensity determination threshold value Vh is information indicating the reception sensitivity (response sensitivity) of the portable device 12. In the present example, the memory 34a stores two signal intensity determination threshold values Vh, a signal intensity determination threshold value Vh1, which is used for vehicle exterior authentication, and a signal intensity determination threshold value Vh2, which is used for vehicle interior authentication. The signal intensity determination circuit 34 sends its comparison result to the microcomputer 21. The signal intensity determination threshold value Vh is set in advance for each vehicle model and can be varied (rewritten) by a command from the microcomputer 21.

When receiving the response request signal Srq from the vehicle 11, the microcomputer 21 determines from the comparison result of the signal intensity determination circuit 34 whether or not to transmit the response signal Srp. The portable device 12 transmits the response signal Srp when the reception signal intensity of the response request signal Srq is greater than or equal to the signal intensity determination threshold value Vh. The portable device 12 does not transmit the response signal Srp when the reception signal intensity of the response request signal Srq is less than the signal intensity determination threshold value Vh. In this manner, the response sensitivity of the portable device 12, that is, the activation distance L from the vehicle 11 allowing the portable device 12 to transmit the response signal Srp, is determined by the signal intensity determination threshold value Vh. This is because the signal intensity of the wireless signal becomes stronger as the transmission source of the signal becomes closer, and the signal intensity becomes weaker as the transmission source becomes farther.

<Example of Reception Sensitivity Setting>

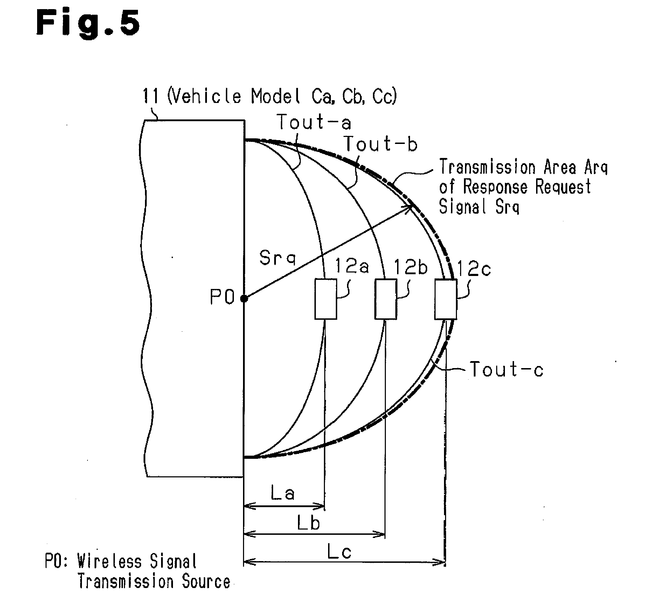

A setting example of the reception sensitivity (in the present example, the signal intensity determination threshold values Vh1 and Vh2) of the portable device 12 for each vehicle model will now be described. Referring to Fig. 5, the settings for three types of vehicles Ca, Cb, and Cc will be described. In Fig. 5, the vehicle 11 becomes smaller in size in the order of vehicle models Cc, Cb, and Ca. The communication area required for the portable device 12 also becomes narrower in the order of vehicle models Cc, Cb, and Ca. However, the transmission area Arq of the response request signal Srq transmitted from the vehicle 11 has the same size in each of the vehicle models. Thus, the range of the area in which the portable device 12 communicates with the vehicle 11 (in the present example, vehicle exterior communication area Tout and vehicle interior communication area Tin) is set in accordance with the reception sensitivity of the portable device 12.

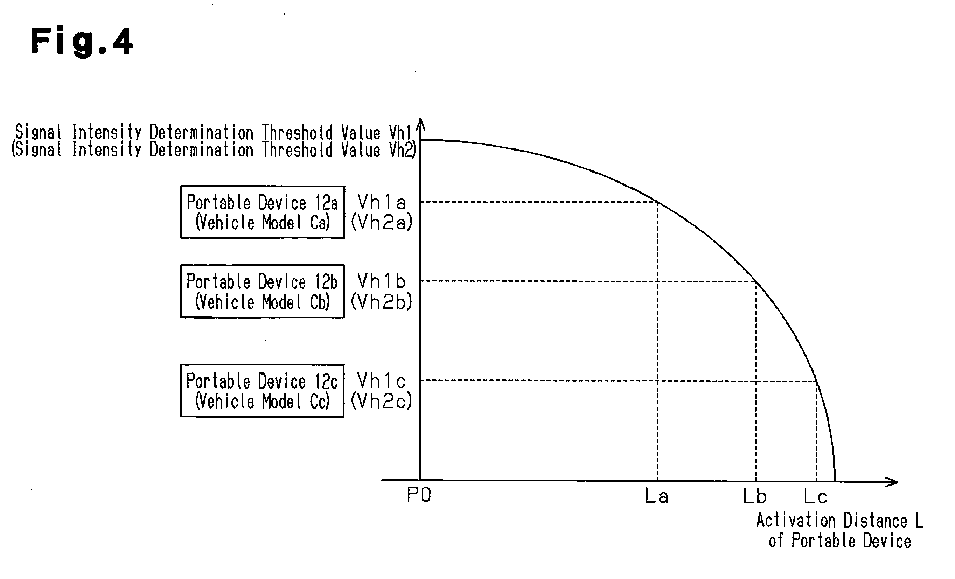

First, the vehicle exterior communication area Tout will be described. Among the three vehicle models, a portable device 12a registered for the vehicle model Ca has the narrowest communication area. Referring to the graph of Fig. 4, the vertical axis represents the signal intensity determination threshold values. The portable device 12a stores a signal intensity determination threshold value Vh1a [dB$\mu$V/m], which is the largest one of the three vehicle models, in the memory 34a of the signal intensity determination circuit 34 as the reception sensitivity information of the portable device 12a. A portable device 12b registered for the vehicle model Cb has the second widest communication area of the three vehicle models. The portable device 12b stores the second largest signal intensity determination threshold value Vh1b [dB$\mu$V/m] of the three vehicle models in the memory 34a of the signal intensity determination circuit 34 as the reception sensitivity information of the portable device 12b. A portable device 12c registered for the vehicle model Cc has the widest communication area of the three vehicle models. The portable device 12c stores the smallest signal intensity determination threshold value Vh1c [dB$\mu$V/m] of the three vehicle models in the memory 34a of the signal intensity determination circuit 34 as the reception sensitivity information of the portable device 12c.

The relation of the signal intensity determination threshold values Vh1a, Vh1b, and Vh1c registered in the portable devices 12a, 12b, and 12c corresponding to the three vehicle models Ca, Cb, and Cc is as shown below.

$$Vh1a > Vh1b > Vh1c$$

As shown in the graph of Fig. 4, as the signal intensity determination threshold value Vh1 increases, the activation distance L of the portable device 12 from the generation source P0 of the signal (exterior LF transmitter 17) decreases. This is because the signal intensity of the response request signal Srq transmitted from the vehicle 11 increases as the transmission source becomes closer. The relation of the activation distances La, Lb, and Lc of the portable devices 12a, 12b, 12c having the signal intensity determination threshold values Vh1a, Vh1b, and Vh1c is as shown below.

$$La < Lb < Lc$$

Accordingly, among the portable devices 12a, 12b, and 12c, the portable device 12c corresponding to the vehicle model Cc has the highest reception sensitivity. The portable device 12b corresponding to the vehicle model Cb has the next highest reception sensitivity, and the portable device 12a corresponding to the vehicle model Ca has the lowest reception sensitivity.

The vehicle exterior communication area Tout is the vehicle exterior region in which a response from the portable device 12 is expected. The portable devices 12a, 12b, and 12c corresponding to the three vehicle models Ca, Cb, and Cc respectively form vehicle exterior communication areas Tout-a, Tout-b, and Tout-c as described below. As shown in Fig. 5, the vehicle exterior communication area Tout-c of the vehicle model Cc is the largest one in size among the three communication areas. Thus, the portable device 12c of the vehicle model Cc responds to the response request signal Srq at the most distant position from the vehicle 11. The vehicle exterior communication area Tout-b of the vehicle model Cb has the next largest size. Thus, the portable device 12b of the vehicle model Cb is activated when located at a position closer to the vehicle 11 than the portable device 12c of the vehicle model Cc. The vehicle exterior communication area Tout-a of the vehicle model Ca has the smallest size. Thus, the portable device 12a of the vehicle model Ca is activated when located at a position closer to the vehicle 11 than the portable device 12b of the vehicle model Cb.

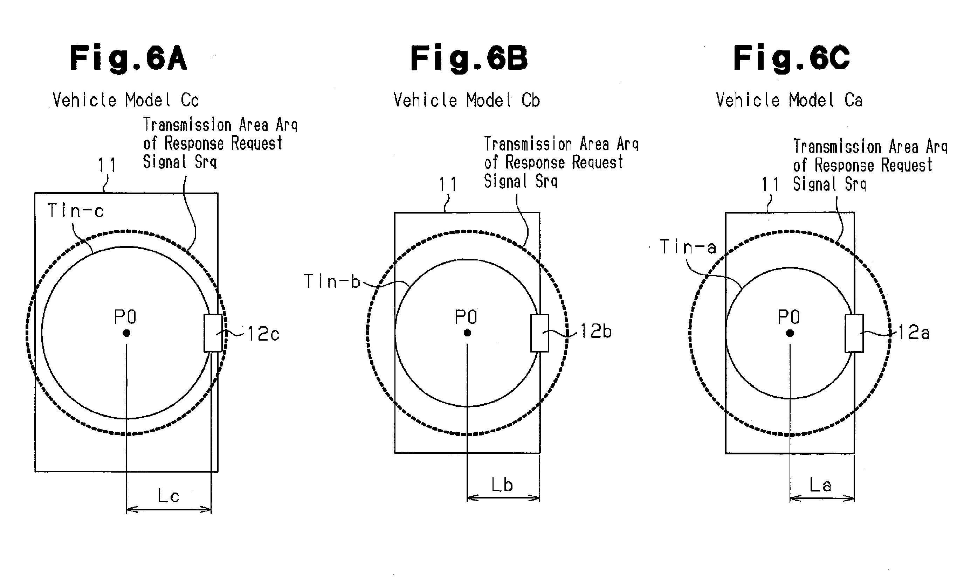

The vehicle interior communication area Tin will now be described. In the same manner as the vehicle exterior communication area Tout, with regard to the vehicle interior communication area Tin, vehicle interior communication areas Tin-a, Tin-b, and Tin-c are respectively set for the vehicle model Ca, Cb, and Cc based on the signal intensity determination threshold value Vh of the portable device 12. As shown in Figs. 6A, 6B, and 6C, the vehicle interior communication area Tin-c of the vehicle model Cc is the largest one in size, the vehicle interior communication area Tin-b of the vehicle model Cb has the second larges size, and the vehicle interior communication area Tin-a of the vehicle model Ca has the smallest size. Thus, the relation of the signal intensity determination threshold values Vh2a, Vh2b, and Vh2c registered in the portable devices 12a, 12b, and 12c corresponding to the three vehicle models Ca, Cb, and Cc is as shown below (refer to vertical axis of the graph of Fig. 4).

$$Vh2a > Vh2b > Vh2c$$

The portable devices 12a, 12b, and 12c respond to the response request signal Srq when approaching the signal generation source P0 and reaching a position where the reception signal intensity of the response request signal Srq, which is used for passenger compartment interior authentication, becomes greater than or equal to the signal intensity determination threshold value Vh2a, the signal intensity determination threshold value Vh2b, and the signal intensity determination threshold value Vh2c, respectively. In other words, the relation of the activation distances La, Lb, and Lc of the portable devices 12a, 12b, and 12c in the passenger compartment from the signal generation source P0 (interior LF transmitter 18) is as shown below.

$$La < Lb < Lc$$

In this manner, the reception sensitivities (response sensitivities) of the portable device 12 inside and outside the vehicle are set for each vehicle model. This forms communication areas outside and inside the vehicle in accordance with the vehicle specifications such as the vehicle size.

<Procedures for Setting Reception Sensitivity of Portable Device>

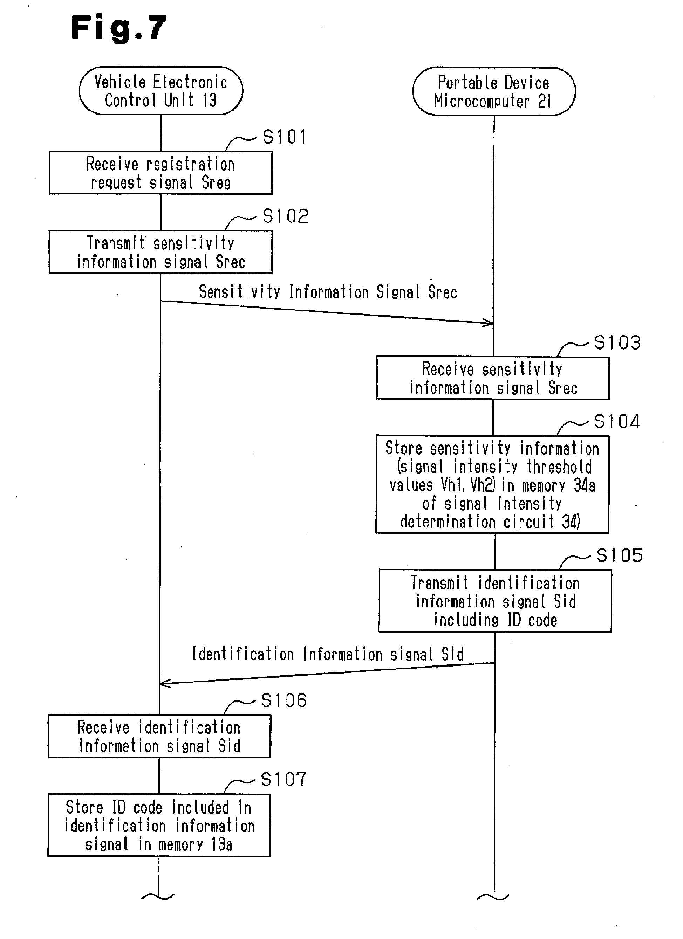

With the electronic key system, the procedures for registering the reception sensitivity information (in the present example, the signal intensity determination threshold value Vh) with the portable device 12 in accordance with the vehicle model will now be described with reference to the sequence chart of Fig. 7. The process for registering the reception sensitivity information to the portable device 12 is performed at the same time as when performing a process for registering the portable device 12 with the vehicle 11. In the process for registering the portable device 12, an ID code unique to the portable device 12 is registered in the memory 13a of the electronic control unit 13 of the vehicle 11 through wireless communication between the vehicle 11 and the portable device 12.

When registering the portable device 12 with the vehicle 11, a portable device registration tool 41 is connected to the electronic control unit 13 of the vehicle 11 (see Fig. 1). The tool 41 sends a registration request signal Sreg, which requests the portable device 12 to execute the registration process, with the electronic control unit 13.

The electronic control unit 13 receives the registration request signal Sreg (step S101). In response to the registration request signal Sreg, the electronic control unit 13 transmits through wireless communication a sensitivity information signal Srec, which is stored in advance in the memory 13a (step S102). In the present example, the sensitivity information signal Srec includes the signal intensity determination threshold value Vh1, which is the response sensitivity information used for vehicle exterior authentication, and the signal intensity determination threshold value Vh2, which is the response sensitivity information used for vehicle interior authentication. For example, the sensitivity information signal Srec for the vehicle model Ca, includes the signal intensity determination threshold value Vh1a and the signal intensity determination threshold value Vh2a. The sensitivity information signal Srec for the vehicle model Cb includes the signal intensity determination threshold value Vh1b and the signal intensity determination threshold value Vh2b. The sensitivity information signal Srec for vehicle model Cc includes the signal intensity determination threshold value Vh1c and the signal intensity determination threshold value Vh2c.

Preferably, the response sensitivity information (in the present example, sensitivity information signal Srec including signal intensity determination threshold value Vh) functions as a request signal requesting execution of a process for registering the portable device 12 with the electronic control unit 13 of the vehicle 11 (in the present example, transmission of the ID code to the electronic control unit 13) in addition to requesting execution of a process for registering the signal intensity determination threshold value Vh with the portable device 12 (in the present example, storage of the threshold values Vh1 and Vh2 in the memory 34a).

The microcomputer 21 of the portable device 12 receives the sensitivity information signal Srec from the electronic control unit 13 of the vehicle 11 (step S103). The microcomputer 21 then stores the signal intensity determination threshold value Vh1 and the signal intensity determination threshold value Vh2, which are included in the sensitivity information signal Srec, in the memory 34a of the signal intensity determination circuit 34 (step S104).

In response to the sensitivity information signal Srec, the microcomputer 21 transmits through wireless communication an identification information signal Sid, which includes its ID code (step S105).

When receiving the identification information signal Sid from the portable device 12 (step S106), the electronic control unit 13 of the vehicle 11 stores the ID code of the portable device 12, which is included in the identification information signal Sid, in the memory 13a (step S107).

This completes the process for registering the sensitivity information (signal intensity determination threshold values Vh1 and Vh2) with the portable device 12 and the process for registering the portable device 12 with the vehicle 11.

After once registering the portable device 12 to the vehicle 11, that is, after once registering the reception sensitivity of the portable device 12, the reception sensitivity may be set again. In the same manner as described above, the resetting of the reception sensitivity is performed by carrying out steps S101 to S107, which are shown in the sequence chart of Fig. 7.

<Operation of Electronic Key System>

The operation of the electronic key system will now be described. First, when the vehicle 11 is in a parked state, the electronic control unit 13 transmits the response request signal Srq from the exterior LF transmitter 17 in predetermined control cycles and forms the transmission area Arq of the response request signal Srq near the vehicle.

When the portable device 12, which is carried by the user, enters the transmission area Arq of the response request signal Srq and receives the response request signal Srq, the response request signal Srq induces voltage at the reception antenna 22a. The filter circuit 31 eliminates noise from the induced voltage. Then, the amplification circuit 32 amplifies the voltage at a predetermined gain. The amplification circuit 32 sends the amplified voltage to the demodulation circuit 33 and the signal intensity determination circuit 34.

The signal intensity determination circuit 34 compares the value of the voltage from the amplification circuit 32 (i.e., reception signal intensity of the response request signal Srq) with the signal intensity determination threshold value Vh1, which is used for vehicle exterior authentication and stored in the memory 34a, and sends the comparison result to the microcomputer 21. When the reception signal intensity is greater than or equal to the signal intensity determination threshold value Vh1, the microcomputer 21 responds to the response request signal Srq, which is received from the demodulation circuit 33, and transmits the response signal Srp, which includes the ID code stored in the memory 21a, from the UHF transmission circuit 23. When the reception signal intensity is less than the signal intensity determination threshold value Vh1, the microcomputer 21 is not activated.

The signal intensity determination threshold value Vh1, which is used for vehicle exterior authentication, is set at a suitable value for each of the vehicle models Ca, Cb, and Cc. Here, the distance of the range of the response request signal Srq transmitted from the exterior LF transmitter 17, that is, the size of the transmission area Arq of the response request signal Srq, is the same for each vehicle model. However, the activation distance of the portable device 12 from the signal transmission source (exterior LF transmitter 17) outside the vehicle is suitable for each vehicle model. In this manner, the reception sensitivity of the portable device 12, that is, the signal intensity determination threshold value Vh1 is set in accordance with the vehicle model. This forms a vehicle exterior communication area Tout that is suitable for each vehicle model (refer to Fig. 5). In other words, the vehicle exterior communication area Tout is set based on the reception sensitivity of the portable device 12.

When receiving the response signal Srp from the portable device 12 via the UHF receiver 19, the electronic control unit 13 of the vehicle 11 verifies the ID code of the portable device 12 with the ID code stored in the memory 13a (vehicle exterior authentication). When the vehicle exterior authentication is successful, the electronic control unit 13 unlocks the vehicle door with the door lock system 15 or permits the door lock system 15 to unlock the vehicle door.

When detecting with a door courtesy switch (not shown) that the user has opened and closed the vehicle door, that is, that the user has entered the vehicle, the electronic control unit 13 stops transmitting the response request signal Srq from the exterior LF transmitter 17. Then, the electronic control unit 13 transmits the response request signal Srq to the passenger compartment in the vehicle from the interior LF transmitter 18. This forms the transmission area Arq of the response request signal Srq throughout the entire passenger compartment. The transmission of the response request signal Srq from the exterior LF transmitter 17 may be stopped when receiving the response signal Srp from the portable device 12.

After the microcomputer 21 of the portable device 12 transmits the response signal Srp through wireless communication in response to the response request signal Srq, which is for vehicle exterior authentication, the microcomputer 21 switches to the reception sensitivity used for vehicle interior authentication. In other words, the microcomputer 21 sends a command signal to the signal intensity determination circuit 34 to instruct the use of the signal intensity determination threshold value Vh2, which is used for vehicle interior authentication, as a new determination criterion in lieu of the signal intensity determination threshold value Vh1, which has been use for vehicle exterior authentication. Accordingly, when receiving the command signal, the signal intensity determination circuit 34 compares the reception signal intensity of the response request signal Srq with the signal intensity determination threshold value Vh2.

In the same manner as when executing vehicle exterior authentication, when the portable device 12 enters the transmission area Arq of the response request signal Srq, which is for vehicle interior authentication, and receives the response request signal Srq, the response request signal Srq induces voltage at the reception antenna 22a. The induced voltage is sent to the demodulation circuit 33 and the signal intensity determination circuit 34 via the filter circuit 31 and the amplification circuit 32.

The signal intensity determination circuit 34 compares the value of the voltage output from the amplification circuit 32 (i.e., reception signal intensity of the response request signal Srq) with the signal intensity determination threshold value Vh2, which is used for vehicle interior authentication and stored in the memory 34a, and sends the comparison result to the microcomputer 21. When the reception signal intensity is greater than or equal to the signal intensity determination threshold value Vh2, the microcomputer 21 responds to the response request signal Srq from through the demodulation circuit 33 and transmits the response signal Srp, which includes the ID code stored in the memory 21a, from the UHF transmission circuit 23. When the reception signal intensity is less than the signal intensity determination threshold value Vh2, the microcomputer 21 is not activated.

The signal intensity determination threshold value Vh2, which is used for vehicle exterior authentication, is set at a suitable value for each of the vehicle models Ca, Cb, and Cc. Here, the distance of the range of the response request signal Srq transmitted from the interior LF transmitter 18, that is, the size of the transmission area Arq of the response request signal Srq, is the same for each vehicle model. However, the activation distance of the portable device 12 from the signal transmission source (interior LF transmitter 18) inside the vehicle is suitable for each vehicle model. In this manner, the reception sensitivity of the portable device 12, that is, the signal intensity determination threshold value Vh2 is set in accordance with the vehicle model. This forms a vehicle interior communication area Tin that is suitable for each vehicle model (refer to Figs. 6A to 6C). In other words, the vehicle interior communication area Tin is set based on the reception sensitivity of the portable device 12.

When receiving the response signal Srp from the portable device 12, which has entered the transmission area Arq of the vehicle interior, via the UHF receiver 19, the electronic control unit 13 verifies the ID code of the portable device 12 with the ID code stored in the memory 13a (vehicle interior authentication). When the vehicle interior authentication is successful, the electronic control unit 13 permits the engine system 16 to switch the power supply state of the vehicle 11.

In this state, the engine (not shown) is stopped. When the brake pedal (not shown) is depressed and an engine switch (not shown), which is arranged in front of the driver seat, is operated, the engine system 16 executes control for starting the engine. In a state in which the engine is idling (idle state) and the gearshift lever (not shown) is held at a parking position (P range), the engine system 16 stops the engine when the engine switch is operated. In a state in which the engine is stopped and the brake pedal is not depressed, the power supply state of the vehicle 11 is repeatedly switched in the order of power OFF (OFF) → accessory ON (ACC - ON), and ignition ON (IG - ON) whenever the engine switch is operated. In this manner, the engine is started and stopped just by operating the engine switch and without operating the portable device 12.

<Advantages of Embodiment>

The portable device 12 and the remote control system including the portable device 12 have the advantages described below.

(1) The response sensitivity of the portable device 12 is set based on the sensitivity information signal Srec, which is suitable for the vehicle 11 (vehicle model or the like) and transmitted through wireless communication from the electronic control unit 13 of the vehicle 11. Thus, the communication area in which the portable device 12 can communicate with the vehicle 11 in response to the response request signal Srq from the vehicle 11 is set to have a size that is suitable for the vehicle 11. When the portable device 12 is set to have a high response sensitivity, the activation distance (distance in which the response request signal Srq can be received) of the portable device 12 from the vehicle 11 is long, that is, the size of the area in which the portable device 12 communicates with the vehicle 11 is large. When the portable device 12 is set to have a low response sensitivity, the activation distance of the portable device 12 from the vehicle 11 is short, that is, the size of the area in which the portable device communicates with the vehicle 11 is small. Further, the response sensitivity of the portable device 12 is set through the wireless communication between the vehicle 11 and the portable device 12. Thus, the communication area is easily set in accordance with the vehicle model by setting the response sensitivity.

(2) To form the communication area in correspondence with the vehicle model, an output circuit (transmission circuit) having a different specification, such as the transmission output of the wireless signal, does not have to be prepared for each model of the vehicle 11. This differs from the prior art in which the transmission area Arq of the response request signal Srq and, consequently, the communication area of the vehicle 11 and portable device 12 are set from the vehicle in accordance with to the vehicle model. This is because the range of the communication area is determined in accordance with the response sensitivity of the portable device 12 in the present example. Thus, an exclusive transmission circuit having a different specification does not have to be designed for each vehicle model. This reduces the design cost of the transmission circuit and, ultimately, the manufacturing cost of the electronic key system.

(3) When setting the communication area with the portable device 12, the response sensitivity information of the portable device 12 corresponding to the vehicle 11 may be stored in advance in the portable device 12. However, such a scheme has not been employed since this would increase variations of the portable device in accordance with the vehicle model.

In contrast, the present example requires only one type of the portable device 12. The portable device 12 acquires the response sensitivity information that is suitable for the associated vehicle 11 through wireless communication and sets the response sensitivity based on the acquired information. Thus, the same portable device 12 may be used regardless of the vehicle model. Since there are no variations of the portable device 12, costs required to manage the portable device 12 for each model of the vehicle 11 are reduced. This reduces the manufacturing cost for the electronic key system.

With regard to the electronic control unit 13 of the vehicle 11, in addition to the response sensitivity of the portable device 12, there are many parameters (e.g., various types of vehicle information) for each vehicle model. This makes it difficult to reduce variations of the electronic control unit 13.

(4) The signal intensity determination threshold value Vh (in the present example, threshold values Vh1 and Vh2) is used as the response sensitivity information transmitted from the vehicle 11. The signal intensity determination threshold value Vh is set in advance based on the activation distance L from the vehicle 11 in which the portable device 12 can communicate with the electronic control unit 13. When receiving the sensitivity information signal Srec, the portable device 12 stores the signal intensity determination threshold value Vh, which is included in the sensitivity information signal Srec, in the memory 34a of the signal intensity determination circuit 34. The microcomputer 21 of the portable device 12 determines whether or not the reception signal intensity satisfies the activation condition level of the portable device 12 by comparing the reception signal intensity of the response request signal Srq and the signal intensity determination threshold value Vh. When the reception signal intensity is greater than or equal to the signal intensity determination threshold value Vh, the microcomputer 21 transmits the response signal Srp through wireless communication. When the reception signal intensity is less than the signal intensity determination threshold value Vh, the microcomputer 21 does not transmit the response signal Srp.

The activation distance L of the portable device 12 differs in accordance with the signal intensity determination threshold value Vh. An increase in the signal intensity determination threshold value Vh shortens the activation distance L of the portable device 12. In other words, the area in which the portable device 12 communicates with the vehicle 11 becomes small. A decrease in the signal intensity determination threshold value Vh lengthens the activation distance L of the portable device 12. In other words, the area in which the portable device 12 communicates with the vehicle 11 becomes large. This is because the signal intensity of the wireless signal becomes stronger as the transmission source of the wireless signal becomes closer, and weaker as the transmission source becomes farther. In this manner, the communication area corresponding to the vehicle model of the vehicle 11 is easily set by setting of the signal intensity determination threshold value Vh, which is used as the criterion for determining whether or not the reception signal intensity of the wireless signal satisfies the activation condition level of the portable device 12.

(5) The sensitivity information signal Srec (response sensitivity information) of the portable device 12 suitable for the vehicle 11 is transmitted from the vehicle 11 through wireless communication when registering the portable device 12 with the vehicle 11. The portable device 12 transmits its ID code (identification information) through wireless communication to the vehicle 11 in response to the sensitivity information signal Srec. In this manner, the response sensitivity of the portable device 12 is set when registering the portable device 12. This improves the efficiency for setting the response sensitivity of the portable device 12.

It should be apparent to those skilled in the art that the present invention may be embodied in many other specific forms without departing from the scope of the invention. Particularly, it should be understood that the present invention may be embodied in the following forms.

In the above-described embodiment, two types of response sensitivity information, namely, the signal intensity determination threshold value Vh1, which is used for vehicle exterior authentication, and the signal intensity determination threshold value Vh2, which is used for vehicle interior authentication, are set for each vehicle model and stored in the memory 34a of the signal intensity determination circuit 34. However, just one of the two signal intensity determination threshold values Vh1 and Vh2 may be stored. For example, just the signal intensity determination threshold value Vh2, which is used for vehicle interior authentication, may be stored. In this case, to avoid an increase in the variations of the portable device 12, it is preferable that the response sensitivity for performing vehicle exterior authentication of the portable device 12 be the same regardless of the vehicle model. The size of the passenger compartment differs greatly in accordance with the vehicle model. Thus, the setting of the response sensitivity used for vehicle interior authentication of the portable device 12 in accordance with the vehicle model is especially effective.

In the above-described embodiment, the response sensitivity information of the portable device 12 is transmitted and received between the exterior LF transmitter 17 of the vehicle 11 and the LF reception circuit 22 of the portable device 12. However, this may be modified in the following manner. An antenna coil may be arranged near the driver seat in the passenger compartment. When receiving the registration request signal Sreg from the portable device registration tool 41, the electronic control unit 13 transmits the sensitivity information signal Srec as the wireless signal in the LF band from the antenna coil. When receiving the sensitivity information signal Srec from the antenna coil with the LF reception circuit 22, the portable device 12 stores the sensitivity information (signal intensity determination threshold value Vh) included in the signal Srec. The response sensitivity information of the portable device 12 may be exchanged in such manner. In such a case, the portable device 12 is preferably arranged near the antenna coil when registering the response sensitivity information in the portable device 12.

In the above-described embodiment, the signal intensity determination threshold value Vh, which serves as the response sensitivity information of the portable device 12, is stored in the memory 34a of the signal intensity determination circuit 34 but may be stored in the memory 21a of the microcomputer 21. In such a case, the microcomputer 21 acquires information related to the reception signal intensity from the signal intensity determination circuit 34 and determines whether or not to transmit the response signal Srp by comparing the reception signal intensity and the signal intensity determination threshold value Vh stored in the memory 21a.

The electronic key system of the above-described embodiment is applied to a vehicle. The electronic key system mal also be applied to a dwelling.

The response sensitivity information may include just either one of the first signal intensity determination threshold value Vh1, which is for determining the signal intensity of the response request signal Srq transmitted through wireless communication to the vehicle exterior communication area Tout, and the second signal intensity determination threshold value Vh2, which is for determining the signal intensity of the response request signal Srq transmitted through wireless communication to the vehicle interior communication area Tin. In either case, the range of the communication area in which the response request signal can be received outside or inside the may be determined by setting the response sensitivity of the portable device 12. This structure is preferable for setting the area of communication between the vehicle 11 and the portable device 12 when there are many vehicle models.

The foregoing description discloses a method for setting the response sensitivity of the portable device 12 in the remote control system that authenticates the portable device 12 with the control unit 13 through wireless communication between the portable device 12 and the control unit 13 of a remote control subj ect (vehicle 11) and controls the remote control subj ect based on the authentication result. The method includes receiving the registration request signal Sreg with the control unit 13 of the remote control subject, transmitting the response sensitivity information Srec suitable for the remote control subject from the control unit 13 to the portable device 12 through wireless communication in response to the registration request signal Sreg, setting the response sensitivity Vh with the portable device 12 based on the response sensitivity information Srec transmitted through wireless communication from the control unit 13, transmitting the identification information Sid from the portable device 12 to the control unit 13 through wireless communication in response to the response sensitivity information Srec, and storing the identification information Sid transmitted through wireless communication from the portable device 12 in the memory 13a with the control unit 13 in response to the response sensitivity information Srec. This efficiently sets the response sensitivity of the portable device 12 when registering the portable device.

The present examples and embodiments are to be considered as illustrative and not restrictive, and the invention is not to be limited to the details given herein, but may be modified within the scope and equivalence of the appended claims.

## Claims

1. A portable device (12) for remotely controlling a remote control subject (11) by receiving a response request signal (Srq) transmitted through wireless communication from a control unit (13) of the remote control subject (11) and returning a response signal (Srp) for the response request signal to the control unit, the portable device being **characterized in that**:

   the portable device (12) is adapted to set a response sensitivity (Vh) based on response sensitivity information (Srec) suitable for the remote control subject (11) transmitted through wireless communication from the control unit (13) of the remote control subject separately from the response request signal.

2. The portable device (12) according to claim 1, being **characterized in that**:

   the response sensitivity information (Srec) includes a signal intensity determination threshold value (Vh) set in advance based on an activation distance (L) from the remote control subject (11) in which the portable device (12) is communicable with the control unit (13);
the portable device (12) includes:

a memory (34a) that stores the signal intensity determination threshold value (Vh); and a control circuit (34) that determines whether or not a reception signal intensity of the response request signal (Srq) satisfies an activation condition level of the portable device (12) by comparing the reception signal intensity of the response request signal (Srq) with the signal intensity determination threshold value (Vh); and
the control circuit (34) transmits the response signal (Srp) through wireless communication when the reception signal intensity is greater than or equal to the signal intensity determination threshold value (Vh), and the control circuit (34) refrains from transmitting the response signal (Srp) through wireless communication when the reception signal intensity is less than the signal intensity determination threshold value (Vh).

3. The portable device (12) according to claim 1, being **characterized in that**:

the portable device (12) is adapted to register the portable device with the control unit (13) of the remote control subject (11) by transmitting identification information (ID: Sid) of the portable device to the control unit (13) and storing the identification information in the control unit; and the response sensitivity information functions as a request signal (Srec) requesting the registration of the portable device (12) with the control unit (13) of the remote control subject (11) in addition to being registered with the portable device (12).

4. The portable device (12) according to claim 1, being **characterized in that**:

the response request signal (Srq) is transmitted from the control unit (13) to a constant transmission area (Arq), and the portable device is adapted to determine a communication area (Tin; Tout) in which the response request signal (Srq) from the control unit is receivable by receiving the response sensitivity information (Srec) from the control unit before receiving the response request signal.

5. The portable device (12) according to claim 4, being **characterized in that**:

the response sensitivity information (Srec) includes a signal intensity determination threshold value (Vh) for determining a signal intensity of the response request signal (Srq), the signal intensity determination threshold value being set to be lower when a larger communication area (Tin; Tout) is required.

6. The portable device (12) according to claim 4, being **characterized in that**:

the remote control subject is a vehicle (11); the communication area includes a vehicle exterior communication area (Tout) and a vehicle interior communication area (Tin); and the response sensitivity information (Srec) includes a first signal intensity determination threshold value (Vh1), which is used to determine the signal intensity of the response request signal (Srq) in the vehicle exterior communication area (Tout), and a second signal intensity determination threshold value (Vh2), which is used to determine the signal intensity of the response request signal (Srq) in the vehicle interior communication area (Tin).

7. A remote control system that performs authentication with a portable device (12) using a control unit (13) of a remote control subject (11) through wireless communication performed between the portable device (12) and the control unit (13) and controls the remote control subject (11) based on the result of the authentication, the remote control system being **characterized in that**:

the control unit (13) of the remote control subject is adapted to register the portable device (12) by receiving a registration request signal (Sreg), transmitting response sensitivity information (Srec) suitable for the remote control subject (11) through wireless communication to the portable device (12) in response to the registration request signal (Sreg), and storing in a memory (13a) identification information (ID: Sid) transmitted from the portable device (12) through wireless communication in response to the response sensitivity information (Srec); and the portable device (12) is adapted to set its response sensitivity (Vh) based on the response sensitivity information (Srec) transmitted through wireless communication from the control unit (13) of the remote control subject (11), and transmit the identification information (ID: Sid) through wireless communication to the control unit (13) of the remote control subject (11) in response to the response sensitivity information (Srec).

# Fig.1

Tool ~41

Electronic Control Unit ~13

Memory ~13a

ID Code

Signal Intensity Determination Threshold Value Vh1

Signal Intensity Determination Threshold Value Vh2 ~Vh

14~

Door Lock System ~15

Engine System ~16

Exterior LF Transmitter ~17

Interior LF Transmitter ~18

UHF Receiver ~19

Srq

Srp

11

LF Reception Circuit ~22

UHF Transmission Circuit ~23

21~

Microcomputer

Memory

ID Code

21a

12

EP 2 251 837 A2

# Fig.2

# Fig.3

# Fig.4

Signal Intensity Determination Threshold Value Vh1
(Signal Intensity Determination Threshold Value Vh2)

| Portable Device 12a (Vehicle Model Ca) | Vh1a (Vh2a) |
| Portable Device 12b (Vehicle Model Cb) | Vh1b (Vh2b) |
| Portable Device 12c (Vehicle Model Cc) | Vh1c (Vh2c) |

P0    La    Lb    Lc

Activation Distance L
of Portable Device

EP 2 251 837 A2

# Fig.5

11 (Vehicle Model Ca, Cb, Cc)

Tout-a

Tout-b

Transmission Area Arq
of Response Request
Signal Srq

Srq

12a  12b  12c

P0

Tout-c

La

Lb

Lc

P0: Wireless Signal
Transmission Source

## Fig.6A

Vehicle Model Cc

## Fig.6B

Vehicle Model Cb

## Fig.6C

Vehicle Model Ca

EP 2 251 837 A2

# Fig.7

```
┌─────────────────────┐                    ┌─────────────────────┐
│  Vehicle Electronic │                    │   Portable Device   │
│   Control Unit 13   │                    │  Microcomputer 21   │
└─────────────────────┘                    └─────────────────────┘
           │                                          │
           │            ~S101                         │
    ┌──────────────────────┐                          │
    │ Receive registration │                          │
    │  request signal Sreg │                          │
    └──────────────────────┘                          │
           │            ~S102                         │
    ┌──────────────────────┐                          │
    │ Transmit sensitivity │                          │
    │ Information signal Srec│                         │
    └──────────────────────┘                          │
           │   Sensitivity Information Signal Srec     │
           │─────────────────────────────────────────▶│
           │                                          │
           │                              ~S103        │
           │                  ┌──────────────────────┐ │
           │                  │  Receive sensitivity │ │
           │                  │ information signal Srec│ │
           │                  └──────────────────────┘ │
           │                              ~S104        │
           │                  ┌──────────────────────┐ │
           │                  │ Store sensitivity information │
           │                  │ (signal intensity threshold   │
           │                  │ values Vh1, Vh2) in memory 34a │
           │                  │   of signal intensity         │
           │                  │  determination circuit 34)    │
           │                  └──────────────────────┘ │
           │                              ~S105        │
           │                  ┌──────────────────────┐ │
           │                  │ Transmit identification │
           │                  │ information signal Sid  │
           │                  │   including ID code     │
           │                  └──────────────────────┘ │
           │   Identification Information signal Sid   │
           │◀─────────────────────────────────────────│
           │            ~S106                         │
    ┌──────────────────────┐                          │
    │ Receive identification│                         │
    │ information signal Sid │                         │
    └──────────────────────┘                          │
           │            ~S107                         │
    ┌──────────────────────┐                          │
    │ Store ID code included in │                     │
    │ identification information │                    │
    │  signal in memory 13a     │                     │
    └──────────────────────┘                          │
           │                                          │
           ∿                                          ∿
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009115871 A
- JP 2007258877 A

- JP 3003668 B